# EUROPÄISCHE PATENTSCHRIFT

(11) **EP 1 040 562 B1**
(45) Veröffentlichungstag und Bekanntmachung des Hinweises auf die Patenterteilung: **19.11.2003**
(21) Anmeldenummer: 98956752.4
(22) Anmeldetag: 08.12.1998
(51) Int. Cl.: H02P 6/24

(54) **Elektronische Motorsteuerung mit einer elektrischen Bremsvorrichtung**
Electronic motor control comprising an electric brake apparatus
Commande de moteur électronique comportant un dispositif de freinage électrique

(30) Priorität: 18.12.1997 CH 290597; 16.03.1998 CH 63198
(43) Veröffentlichungstag der Anmeldung: 04.10.2000
(73) Patentinhaber: ELMOTEC AG, 5314 Kleindöttingen (CH)
(72) Erfinder: MÜLLER, Albin, CH-5324 Full-Reuenthal (CH)
(74) Vertreter: Spierenburg, Pieter
(86) Internationale Anmeldenummer: CH9800517
(87) Internationale Veröffentlichungsnummer: WO99033164

(56) Entgegenhaltungen:
- EP-A- 0 685 925
- DE-A- 2 747 267
- DE-A- 3 539 841
- GB-A- 1 532 811
- US-A- 4 039 914
- US-A- 5 247 231
- US-A- 5 659 231
- BECERRA R C ET AL: "FOUR-QUADRANT BRUSHLESS ECM DRIVE WITH INTEGRATED CURRENT REGULATION" IEEE TRANSACTIONS ON INDUSTRY APPLICATIONS, Bd. 28, Nr. 4, 1. Juli 1992, Seiten 833-841, XP000306579

## Beschreibung

Die Erfindung betrifft eine elektronische Motorsteuerung nach dem Oberbegriff des Patentanspruchs 1 und die Verwendung einer elektronischen Motorsteuerung nach dem Oberbegriff des Patentanspruchs 13.

Eine solche Motorsteuerung für Elektromotoren ist allgemein bekannt und besteht normalerweise aus einer Anordnung von Gleichrichtern, insbesondere Feldeffekttransistoren, die sich annähernd leistungslos steuern lassen und vom Drehstromnetz gespeist werden. Mit den Feldeffekttransistoren werden die Sinuswellen in ihren Pulsweiten moduliert, so dass damit die Leistung des Elektromotors, d.h. seine lastabhängige Drehzahl, gesteuert werden kann. Wird nun ein solcher Elektromotor vom Netz getrennt, was beispielsweise durch einen Netzausfall oder durch eine Notbremsung verursacht werden kann, so muss die durch den nun als Generator wirkenden Elektromotor erzeugte Energie vernichtet werden. Dies geschieht üblicherweise mittels grosser Widerstände und einer Steuerung aus elektrischen Schützen. Diese Art der Energievernichtung nimmt ziemlich viel Platz in Anspruch und muss wegen der grossen Wärmeableitung auf genügendem Abstand vom Elektromotor angeordnet sein. Insbesondere für Elektromotoren für elektrische Eisenbahnen, welche nicht für den Antrieb vorgesehen sind, müssen die entsprechenden Vorschriften genauestens eingehalten werden.

Andererseits ist aus DE-A-35 39 841 eine Widerstandsbremseinrichtung für Universalmotoren von handgeführten Elektrowerkzeugen bekannt. Um nach dem Abschalten des Motorbetriebs zu einem schnellen Stillstand zu gelangen, wird der Antriebsmotor in Generatorbetrieb umgeschaltet, wozu die Feldwicklung gegenüber dem Anker umgepolt und ein Widerstandsbremskreis an den Universalmotor angeschlossen wird. Damit kein ruckartiges Bremsen erfolgt und auch der Kollektor nicht übermässig belastet wird, weist der Widerstandsbremskreis zwischen seinen Anschlüssen einen mit der EMK fallenden Widerstandswert auf, wodurch der zwischen den Anschlüssen fliessende Strom nahezu konstant gehalten wird. Die Umschaltung vom Antrieb auf den normalen Bremsbetrieb erfolgt mittels eines Relais. In einem Beispiel ist ein Leistungs-MOS-FET im Widerstandsbremskreis vorgesehen. Unter anderem wegen der hohen Strombelastung ist die hier beschriebene Schaltung ist nicht für den Notfallbetrieb bei Netzausfall eines bürstenlosen Servomotors geeignet.

Des weiteren offenbart US-A-5 659 231 einen bürstenlosen Elektromotor, der mittels eines Halbleiterbremskreises gebremst wird, indem die Motorenergie in die vorhandene Motorsteuerung zurückgeleitet und dabei in Wärme umgewandelt wird (siehe Spalte 2, Zeilen 19 bis 23). Ferner ist in IEEE Transactions on Ind. Applications, Bd. 28, Nr. 4 (1992), Seiten 833 bis 841 ein bürstenloser Antrieb für einen elektronischen Kommutatormotor in vier Quadranten beschrieben, der eine Steuerung mit MOSFET's beinhaltet, jedoch für Antriebszwecke und mit regenerativer Bremsung ausgelegt ist.

Der vorliegenden Erfindung liegt nun die Aufgabe zugrunde, eine elektronische Motorsteuerung der vorgenannten Art derart zu verbessern, dass eine platzsparende und kostengünstige Anordnung erreicht werden kann.

Diese Aufgabe wird durch eine elektronische Motorsteuerung mit den Merkmalen des Patentanspruchs 1 und durch die Verwendung einer elektronischen Motorsteuerung mit den Merkmalen des Patentanspruchs 13 gelöst.

Die erfindungsgemässe elektronische Motorsteuerung mit elektrischer Bremsvorrichtung für einen Elektromotor weist eine Anordnung mit mindestens einem Feldeffekttransistor als Leistungssteuerelement auf, welche von einem Operationsverstärker derart ansteuerbar ist, dass die Anordnung als elektrische Bremse wirkt. Die Anordnung kann einerseits Graetz-geschaltete Gleichrichter aufweisen, die dem Feldeffekttransistor vorgeschaltet sind, andererseits aber auch zwei komplementär geschaltete Feldeffekttransistoren aufweisen, wodurch die Anordnung für eine wesentlich höhere Bremsleistung ausgelegt ist.

Es ist besonders vorteilhaft, wenn der Feldeffekttransistor als MOSFET, insbesondere als n-Kanal-MOSFET, ausgebildet ist.

In der Praxis hat es sich bewährt, wenn zusätzlich als Temperaturüberwachung ein zweiter Operationsverstärker dem ersten Operationsverstärker vorgeschaltet ist. Ferner hat es sich als besonders zweckmässig erwiesen, wenn dem zweiten Operationsverstärker ein dritter Operationsverstärker als Unterspannungsüberwachung vorgeschaltet ist. Die Betriebsbereitschaft der elektronischen Motorsteuerung wird mit Vorteil von einem Optokoppler erbracht, der am dritten Operationsverstärker angeschlossen ist. Mittels eines weiteren Optokopplers kann die Auslösung einer Notbremsung erfolgen, der zweckmässigerweise ebenfalls am dritten Operationsverstärker angeschlossen ist.

Es hat sich in der Praxis als besonders sinnvoll erwiesen, wenn die Operationsverstärker über einen Kondensator mit der elektrischen Energieversorgung versehen sind. Die Operationsverstärker sind mit Vorteil als integrierte Schaltungen aus Transistoren in CMOS-Logik aufgebaut, damit der Strombedarf möglichst niedrig gehalten werden kann.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt
- Fig. 1: ein Schema einer ersten elektronischen Motorsteuerung, und
- Fig. 2: ein Schema einer zweiten elektronischen Motorsteuerung.

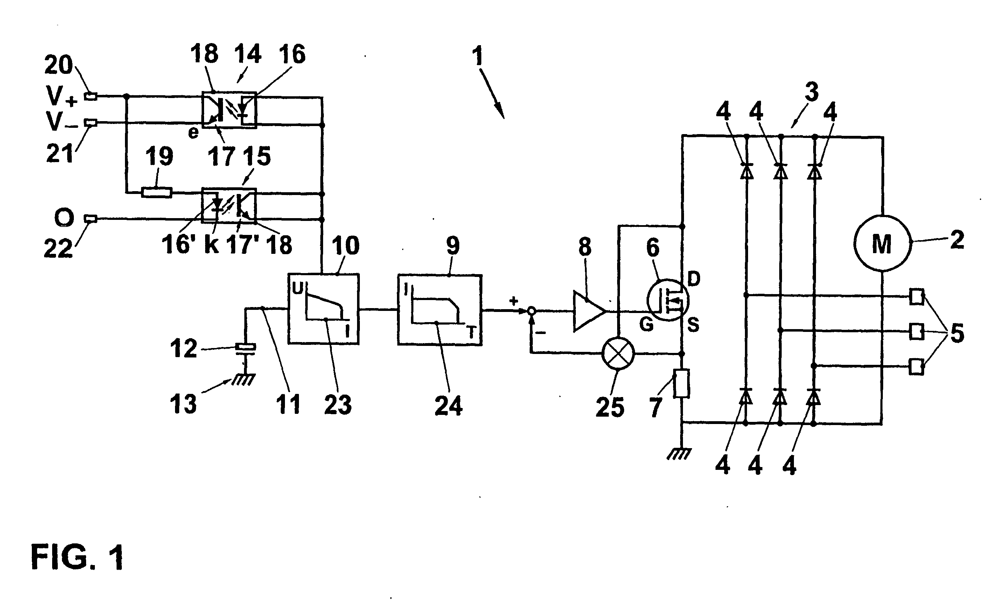

In Figur 1 ist ein Schema einer elektronischen Motorsteuerung 1 für einen Elektromotor 2, insbesondere einen Servomotor für Anwendungen der elektrischen Eisenbahnen, dargestellt. Die elektronische Steuerung 1 weist eine Anordnung 3 aus Gleichrichter-Dioden 4 auf, die in einer sogenannten Graetz-Schaltung mit dem Drehstromnetz 5 verbunden sind. Dadurch kann der bürstenlose Elektromotor 2 bei einem Bremsvorgang als Generator betrieben werden. Um die an den Elektromotor 2 angelegte Belastung zu regeln, ist parallel zur Gleichrichter-Anordung 3 ein Feldeffekttransistor 6 vom sogenannten MOS-Typ angelegt, dessen Source S mittels eines zur Strommessung vorgesehenen Widerstandes 7 auf der Betriebsspannung gehalten ist. Dieser MOSFET 6 ist ferner vom n-Kanal-Typ. Zur Steuerung der am Drain D anliegenden Spannung, die die Betriebsleistung des Elektromotors 2 bestimmt, ist am Gate G ein erster als Treiberstufe dienender Operationsverstärker 8 angeschlossen, welcher über den Source S und mittels eines am Drain D des Feldeffekttransistors 6 angeschlossenen Multiplizierers 25 rückgekoppelt ist. Vorrangig zum ersten Operationsverstärker 8 sind ein zweiter Operationsverstärker 9 zur Temperaturüberwachung und ein dritter Operationsverstärker 10 zur Spannungsüberwachung vorgesehen. Der Eingang 11 des dritten Operationsverstärkers 10 ist über einen Kondensator 12 mit Erde 13 verbunden, wodurch die Operationsverstärker 8, 9 und 10 bei Wegfall der elektrischen Speisung auf der richtigen Betriebsspannung gehalten werden. Diese Operationsverstärker 8, 9 und 10 sind ferner mit Transistoren in CMOS-Logik als integrierte Schaltungen ausgebildet. Am dritten Operationsverstärker 10 sind ein erster Optokoppler 14 und ein zweiter Optokoppler 15 als Steuerelemente angeschlossen. Die Optokoppler 14 und 15 bestehen je aus einer Leuchtdiode 16, bzw. 16' und einem Phototransistor 17, bzw. 17', die aufeinander abgestimmt in einem gemeinsamen Gehäuse 18 untergebracht sind. Der Optokoppler 14 ist so mit dem dritten Operationsverstärker 10 geschaltet, dass damit die Betriebsbereitschaft gegeben ist. In diesem Fall kann mittels des zweiten Optokopplers 15, der über einen Widerstand 19 an der Eingangsklemme 20, die auf der positiven Betriebsspannung V+ liegt, angeschlossen ist, ein Signal an den dritten Operationsverstärker 10 abgegeben werden, um eine Bremsung bei Wegfall der elektrischen Speisung einzuleiten. Die Betriebsspannung V+ und V- liegen dabei um etwa 40 Volt.

Der Emitter e des Phototransistors 17 des ersten Optokopplers 14 ist femer an einer Ausgangsklemme 21 angeschlossen, die auf der negativen Betriebsspannung V- liegt. Die Kathode k der Leuchtdiode 18' des zweiten Optokopplers 15 ist an einer weiteren Anschlussklemme 22 angeschlossen, die auf Nullpotential liegt. Die Steuercharakteristiken 23 und 24 der Operationsverstärker 9 und 10 sind rein schematisch im jeweiligen viereckigen Symbol dargestellt. Die Charakteristik 24 stellt die von der Temperatur T abhängige Steuerung des Steuerstromes I dar, d.h. oberhalb einer Grenztemperatur wird der Strom I abgeschaltet, um eine Zerstörung der Leistungselektronik zu verhindern. Die Charakteristik 24 stellt die von dem Strom I abhängige Steuerung der Spannung U dar, d.h. dass die Spannung U oberhalb eines Grenzstromes I abgeschaltet wird.

Die Funktionsweise der oben beschriebenen, als elektrische Bremse wirkenden elektronischen Motorsteuerung 1 ist nun folgendermassen:

Im Normalbetrieb wird der Servomotor 2 über eine separate elektronische Motorsteuerung (hier nicht dargestellt) betrieben. Wenn die elektrische Speisung wegfällt, wird der nun als Generator wirkende Servomotor 2 durch den ersten Operationsverstärker 8 mittels des MOSFET's 6 auf einer konstanten Belastung gehalten, d.h. dass der Laststrom bei tieferen Drehzahlen des Servomotors 2 bei kleineren Motorspannungen erhöht wird. Der MOSFET 6 ist im Linearbetrieb eingesetzt und wirkt somit direkt als Bremswiderstand, d.h. die freigesetzte elektrische Energie des Servomotors 2, der bei einer Bremsung als Generator wirkt, wird über den MOSFET 6 vernichtet. Damit keine Überlastung der elektronischen Motorsteuerung 1 erfolgen kann, ist eine Temperaturüberwachung durch den zweiten Operationsverstärker 9 vorgesehen. Das Signal für die Einleitung der Notbremsung wird über die Anschlussklemme 22 und den Optokoppler 15 an den dritten Operationsverstärker 10 abgeben. Da die Elektronik der Operationsverstärker 8, 9 und 10 in CMOS-Technik ausgelegt ist, wird der Stromverbrauch für die elektronische Steuerung miminiert.

Wegen der besonders einfachen und platzsparenden Ausbildung der vorliegenden elektronischen Motorsteuerung 1 als elektrische Bremse lässt sich diese unproblematisch im - hier nicht weiter dargestellten - Gehäuse des Elektromotors 2 unterbringen. Da eine Temperaturüberwachung mittels des Operationsverstärkers 9 vorgesehen ist, können auch die bahnbetrieblichen Vorschriften ohne weiteres eingehalten werden. In der Praxis hat sich die vorliegende elektronische Motorsteuerung 1 als besonders kostengünstige und einfache Lösung bewährt. Die elektrischen Verbindungen mit dem Elektromotor 2 sind auch besonders kurz gestaltet, was ebenfalls den bahnbetrieblichen Vorschriften entspricht.

Die beschriebene elektronische Motorsteuerung 1 für Servomotoren 2 kann auch für andere Anwendungen als für elektrische Eisenbahnen eingesetzt werden, wie beispielsweise bei Servomotoren für elektrische Aufzüge oder für Autobusse oder elektrische Trolleybusse.

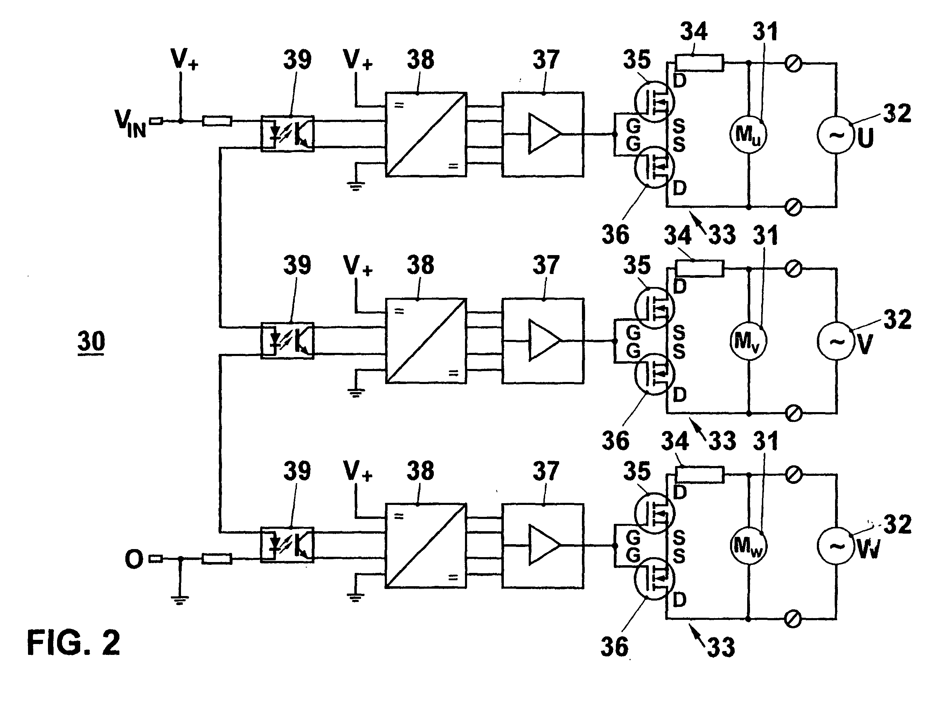

In Figur 2 ist in einer Variante eine zweite elektronische Motorsteuerung 30 dargestellt, die elektrisch mit den drei Phasen M_{U}, M_{V} und M_{W} eines bürstenlosen Synchronmotors 31 verbunden ist, der von den drei Phasen U, V und W eines Servoreglers 32 gespeist wird. Für jede Phase U, V, W ist eine Anordnung 33 mit einem Shuntwiderstand 34 und zwei antiseriell geschalteteten Feldeffekttransistoren 35 und 36 als Leistungssteuerelement vorgesehen, das mittels einer Treiberstufe 37 und eines vorgeschalteten Gleichspannungswandlers 38 über einen Optokoppler 39 angesteuert wird. Die beiden Feldeffekttransistoren 35 und 36 sind an ihren beiden Gates G und an ihren beiden Sources S parallel geschaltet und wirken somit als Wechselspannungs-Relais, so dass die Anordnung 33 für wesentlich höhere Leistungen des Synchronmotors 31 von über 500 W ausgelegt ist. Die beiden Feldeffekttransistoren 35 und 36 sind vom Typ n-Kanal-MOSFET. Da diese Schaltung wesentlich robuster ausbildet ist als die elektronische Motorsteuerung 1 der Figur 1, kann auf die Unterspannungs- und Temperaturüberwachung verzichtet werden. Die Funktionsweise der vorliegenden Motorsteuerung 30 ist ähnlich wie diejenige der Motorsteuerung 1 der Figur 1.

## Patentansprüche

1. Elektronische Motorsteuerung (1; 30) mit einer elektrischen Bremsvorrichtung für die Bremsung eines bürstenlosen Servomotors (2, 31), insbesondere in nicht-antriebsbezogenen Anwendungen der elektrischen Eisenbahnen, in Kombination mit einer zweiten elektronischen Motorsteuerung für den Normalbetrieb des Servomotors, **dadurch gekennzeichnet, dass** die erste elektronische Motorsteuerung (1; 30) für den Betrieb bei Netzausfall oder bei Notbremsung vorgesehen und dazu bestimmt ist, ständig mit dem Servomotor (2, 31) elektrisch verbunden zu sein, und mindestens eine Anordnung (3; 33) aus einer Treiberstufe (8; 37), einem nachgeschalteten Feldeffekttransistor (6; 35, 36) als Leistungssteuerelement und einem Widerstand (7; 34) aufweist, wobei der Feldeffekttransistor (6; 35, 36) von der Treiberstufe (8; 37) derart ansteuerbar ist, dass die Anordnung (3; 33) als elektrische Bremse wirkt, derart dass sie die freigesetzte elektrische Energie des als Generator wirkenden Servomotors (2; 31) vernichtet.

2. Elektronische Motorsteuerung nach Anspruch 1, **dadurch gekennzeichnet, dass** die Anordnung (3) Graetz-geschaltete Gleichrichter (4) aufweist, welche dem Feldeffekttransistor (6) vorgeschaltet sind.

3. Elektronische Motorsteuerung nach Anspruch 1, **dadurch gekennzeichnet, dass** das Leistungssteuerelement zwei antiseriell geschaltete Feldeffekttransistoren (35, 36) aufweist.

4. Elektronische Motorsteuerung nach einem der Ansprüche 1 bis 3, **dadurch gekennzeichnet, dass** der Feldeffekttransistor (6; 35, 36) ein MOSFET ist.

5. Elektronische Motorsteuerung nach Anspruch 4, **dadurch gekennzeichnet, dass** der Feldeffekttransistor (6; 35, 36) ein n-Kanal-MOSFET ist.

6. Elektronische Motorsteuerung nach einem der Ansprüche 2, 4 oder 5, **dadurch gekennzeichnet, dass** der als Operationsverstärker (8) ausgebildeten Treiberstufe ein zweiter Operationsverstärker (9) zur Temperaturüberwachung vorgeschaltet ist.

7. Elektronische Motorsteuerung nach Anspruch 6, **dadurch gekennzeichnet, dass** dem zweiten Operationsverstärker (9) ein dritter Operationsverstärker (10) zur Unterspannungsüberwachung vorgeschaltet ist.

8. Elekronische Motorsteuerung nach Anspruch 7, **dadurch gekennzeichnet, dass** der dritte Operationsverstärker (10) mit einem Optokoppler (14) verbunden ist, der die Betriebsbereitschaft überwacht.

9. Elektronische Motorsteuerung nach Anspruch 8, **dadurch gekennzeichnet, dass** ein weiterer Optokoppler (15) für die Auslösung einer Notbremsung am dritten Operationsverstärker (10) angeschlossen ist.

10. Elektronische Motorsteuerung nach einem der Ansprüche 6 bis 9, **dadurch gekennzeichnet, dass** die Operationsverstärker (8, 9, 10) mit einem Kondensator (12) verbunden sind, der zu deren elektrischen Energieversorgung dient.

11. Elektronische Motorsteuerung nach einem der Ansprüche 1 bis 8, **dadurch gekennzeichnet, dass** die Operationsverstärker (8, 9, 10) auf Transistoren in CMOS-Logik aufgebaut sind.

12. Elektronische Motorsteuerung für einen bürstenlosen Synchronmotor (31) nach einem der Ansprüche 3 bis 5, **dadurch gekennzeichnet, dass** der Treiberstufe (37) ein Gleichspannungswandler (38) vorgeschaltet ist, der an einem Optokoppler (39) zur Auslösung der Notbremsung angeschlossen ist.

13. Verwendung einer elektronischen Motorsteuerung (1; 30) mit einer elektronischen Bremsvorrichtung für die Bremsung eines bürstenlosen Servomotors (2,31), insbesondere in nicht-antriebsbezogenen Anwendungen der elektrischen Eisenbahnen, in Kombination mit einer zweiten elektronischen Motorsteuerung für den Normalbetrieb des Servomotors, **dadurch gekennzeichnet, dass** die erste elektronische Motorsteuerung (1,30), die mindestens eine Anordnung (3; 33) aus einer Treiberstufe (8, 37), einem nachgeschalteten Feldeffekttransistor (6; 35, 36) als Leistungssteuerelement und einem Widerstand (7; 34) aufweist, ständig mit dem Servomotor (2, 31) elektrisch verbunden wird und bei Netzausfall oder bei Notbremsung der Feldeffekttransistor (6; 35, 36) von der Treiberstufe (8; 37) derart angesteuert wird, dass die Anordnung (3, 33) als elektrische Bremse wirkt, derart dass sie die freigesetzte elektrische Energie des als Generator wirkenden Servomotors (2; 31) vernichtet.

## Claims

1. An electronic motor control (1; 30) with an electric brake apparatus for braking a brushless servomotor (2, 31), especially in non-drive-related applications of electric railways, in combination with a second electronic motor control for the normal operation of the servomotor, **characterized in that** the first electronic motor control (1; 30) is provided for operation in the case of mains failure or in the case of an emergency braking and is intended to be continually electrically connected with the servomotor (2, 31) and comprises at least one arrangement (3; 33) consisting of a driver stage (8; 37), a field-effect transistor (6; 35, 36) connected in outgoing circuit as a power control element, and a resistor (7; 34), with the field-effect transistor (6; 35, 36) being controllable by the driver stage (8; 37) in such a way that the arrangement (3; 33) acts as an electric brake, such that it dissipates the released electrical power of the servomotor (2; 31) which acts as a generator.

2. An electronic motor control as claimed in claim 1, **characterized in that** the arrangement (3) comprises Graetz-switched rectifiers (4) which are connected in incoming circuit with the field-effect transistor (6).

3. An electronic motor control as claimed in claim 1, **characterized in that** the power control element comprises two field-effect transistors (35, 36) connected in an anti-serial way.

4. An electronic motor control as claimed in one of the claims 1 to 3, **characterized in that** the field effect transistor (6; 35, 36) is a MOS field-effect transistor.

5. An electronic motor control as claimed in claim 4, **characterized in that** the field-effect transistor (6; 35, 36) is an N-channel MOS field-effect transistor.

6. An electronic motor control as claimed in one of the claims 2, 4 or 5, **characterized in that** the driver stage arranged as an operational amplifier (8) is provided in incoming circuit with a second operational amplifier (9) for temperature monitoring.

7. An electronic motor control as claimed in claim 6, **characterized in that** a third operational amplifier (10) is connected in incoming circuit with the second operational amplifier (9) for low-voltage monitoring.

8. An electronic motor control as claimed in claim 7, **characterized in that** the third operational amplifier (10) is connected with an optical coupler (14) which monitors operational readiness.

9. An electronic motor control as claimed in claim 8, **characterized in that** a further optical coupler (15) is connected to the third operational amplifier (10) for initiating an emergency braking.

10. An electronic motor control as claimed in one of the claims 6 to 9, **characterized in that** the operational amplifiers (8, 9, 10) are connected with a capacitor (12) which is used for electrical power supply.

11. An electronic motor control as claimed in one of the claims 1 to 8, **characterized in that** the operational amplifiers (8, 9, 10) are based on transistors in CMOS logic.

12. An electronic motor control for a brushless servomotor (31) as claimed in one of the claims 3 to 5, **characterized in that** the driver stage (37) is connected in incoming circuit with a d.c.-d.c. converter which is connected to an optical coupler (39) for initiating the emergency braking.

13. Use of an electronic motor control (1; 30) with an electric brake apparatus for braking a brushless servomotor (2, 31), especially in non-drive-related applications of electric railways, in combination with a second electronic motor control for the normal operation of the servomotor, **characterized in that** the first electronic motor control (1, 30) which comprises at least one arrangement (3; 33) consisting of a driver stage (8, 37), a field-effect transistor (6; 35, 36) connected in outgoing circuit as a power control element and a resistor (7; 34) is continually electrically connected with the servomotor (2, 31) and the field-effect transistor (6; 35, 36) is triggered by the driver stage (8; 37) in the case of mains failure or emergency braking in such a way that the arrangement (3, 33) acts as an electrical brake, such that it dissipates the released electrical power of the servomotor (2; 31) which acts as a generator.

## Revendications

1. Commande de moteur électronique (1 ; 30) avec un dispositif de freinage électrique pour le freinage d'un servomoteur sans balai (2, 31), notamment dans des applications aux chemins de fer électriques n'ayant pas trait à l'entraînement, combinée avec une deuxième commande de moteur électronique pour le fonctionnement normal du servomoteur, **caractérisée en ce que** la première commande de moteur électronique (1 ; 30) est prévue pour le fonctionnement en cas de panne de secteur ou de freinage d'urgence et est destinée à être constamment électriquement reliée au servomoteur (2, 31) et qu'elle comporte au moins un montage (3 ; 33) d'un étage « driver » (8 ; 37), d'un transistor à effet de champ monté en aval (6 ; 35; 36) et faisant office d'élément de réglage de puissance et d'une résistance (7 ; 34), le transistor à effet de champ (6 ; 35, 36) étant apte à être excité par l'étage « driver » (8 ; 37) de telle sorte que le montage (3 ; 33) fait fonction de frein électrique en annihilant l'énergie électrique libérée du servomoteur (2 ; 31) faisant office de générateur.

2. Commande de moteur électronique selon la revendication 1, **caractérisée en ce que** le montage (3) comporte des redresseurs en pont de Graetz (4) montés en amont du transistor à effet de champ (6).

3. Commande de moteur électronique selon la revendication 1, **caractérisée en ce que** l'élément de réglage de puissance comporte deux transistors à effet de champ (35, 36) montés en antisérie.

4. Commande de moteur électronique selon l'une quelconque des revendications 1 à 3, **caractérisée en ce que** le transistor à effet de champ (6 ; 35, 36) est un transistor MOSFET.

5. Commande de moteur électronique selon la revendication 4, **caractérisée en ce que** le transistor à effet de champ (6 ; 35, 36) est un transistor MOSFET à canal n.

6. Commande de moteur électronique selon l'une quelconque des revendications 2, 4 or 5, **caractérisée en ce que** l'étage « driver » conformé en forme d'amplificateur opérationnel (8) est précédé d'un deuxième amplificateur opérationnel (9) destiné à surveiller la température et monté en amont du premier.

7. Commande de moteur électronique selon la revendication 6, **caractérisée en ce qu'**un troisième amplificateur opérationnel (10) destiné à surveiller la sous-tension est monté en amont du deuxième amplificateur opérationnel (9).

8. Commande de moteur électronique selon la revendication 7, **caractérisée en ce que** le troisième amplificateur opérationnel (10) est relié à un optocoupleur (14) qui contrôle l'état de service.

9. Commande de moteur électronique selon la revendication 8, **caractérisée en ce qu'**un optocoupleur (15) supplémentaire pour déclencher un freinage d'urgence est couplé au troisième amplificateur opérationnel (10).

10. Commande de moteur électronique selon l'une quelconque des revendications 6 à 9, **caractérisée en ce que** les amplificateurs opérationnels (8, 9, 10) sont reliés à un condensateur (12) qui sert à les alimenter en énergie électrique.

11. Commande de moteur électronique selon l'une quelconque des revendications 1 à 8, **caractérisée en ce que** les amplificateurs opérationnels (8, 9, 10) sont montés sur des transistors en logique CMOS.

12. Commande de moteur électronique pour un moteur synchrone (31) sans balai selon l'une quelconque des revendications 3 à 5, **caractérisée en ce qu'**un convertisseur continu-continu (38) est monté en amont de l'étage « driver » (37), ledit convertisseur étant couplé à un optocoupleur (39) pour déclencher le freinage d'urgence.

13. Utilisation d'une commande de moteur électronique (1 ; 30) avec un dispositif de freinage électronique pour le freinage d'un servomoteur sans balai (2, 31), notamment dans des applications aux chemins de fer électriques n'ayant pas trait à l'entraînement, combinée avec une deuxième commande de moteur électronique pour le fonctionnement normal du servomoteur, **caractérisée en ce que** la première commande de moteur électronique (1, 30), qui comporte au moins un montage (3 ; 33) d'un étage « driver » (8, 37), d'un transistor à effet de champ monté en aval (6 ; 35, 36) et faisant office d'élément de réglage de puissance et d'une résistance (7 ; 34), est constamment électriquement reliée au servomoteur (2, 31) et qu'en cas de panne de secteur ou de freinage d'urgence le transistor à effet de champ (6 ; 35, 36) est excité par l'étage « driver » (8 ; 37) de telle sorte le montage (3, 33) fait office de frein électrique en annihilant l'énergie électrique libérée du servomoteur (2 ; 31) faisant office de générateur.
